Europäisches Patentamt

European Patent Office

Office européen des brevets

(19)

(11) **EP 1 607 442 A1**

(12) **EUROPEAN PATENT APPLICATION**

(43) Date of publication:
   **21.12.2005 Bulletin 2005/51**

(51) Int Cl.⁷: **C08L 77/00**

(21) Application number: **05012769.5**

(22) Date of filing: **14.06.2005**

(84) Designated Contracting States:
   **AT BE BG CH CY CZ DE DK EE ES FI FR GB GR
   HU IE IS IT LI LT LU MC NL PL PT RO SE SI SK TR**
   Designated Extension States:
   **AL BA HR LV MK YU**

(30) Priority: **15.06.2004 JP 2004176796**

(71) Applicants:
   • **THE YOKOHAMA RUBBER CO., LTD.
     Tokyo 105-8685 (JP)**
   • **Toyota Jidosha Kabushiki Kaisha
     Toyota-shi, Aichi-ken 471-8571 (JP)**

(72) Inventors:
   • **Yamauchi, Shigeru
     The Yokohama Rubber Co., Ltd.
     Hiratsuka City Kanagawa 254-8601 (JP)**
   • **Suzuki, Noriyuki Toyota Jidosha K.K.
     Toyota-shi Aichi-ken 471-8571 (JP)**
   • **Suzuki, Yasuyuki Toyota Jidosha K.K.
     Toyota-shi Aichi-ken 471-8571 (JP)**

(74) Representative: **Vossius & Partner
   Siebertstrasse 3
   81675 München (DE)**

(54) **Thermoplastic resin composition for automobile parts**

(57)    Disclosed is a thermoplastic resin composition for automobile parts comprising a continuous phase composition including a thermoplastic polyamide resin and a disperse phase composition dispersed in the continuous phase composition, wherein the disperse phase composition includes a dynamically crosslinked acrylonitrile-butadiene rubber in which an acrylonitrile amount is 31 wt% or more and less than 55 wt%. The thermoplastic resin composition for automobile parts of the present invention has an excellent resistance to gas and moisture permeation, heat, oil, fuel oil, and the like.

EP 1 607 442 A1

**Description**

The present invention relates to a thermoplastic resin composition for automobile parts to be used for automobile parts, particularly suitably for fuel system-related and engine-related parts.

In recent years, replacement of rubbers used as materials of parts of automobile or the like by recyclable thermoplastic resins is proceeding. For example, one of the inventors of the present invention have suggested, as a thermoplastic elastomer composition having an excellent durability, flexibility, and resistance to gas permeation, a thermoplastic elastomer composition (D) in which a dynamically crosslinked rubber phase (B) is dispersed in a thermoplastic resin (A), and part or whole of (A) is a nanocomposite (C) including a thermoplastic resin and a layered clay mineral (see JP 2000-160024 A, the term "JP XX-XXXXXX A" as used herein means an "unexamined published Japanese patent application").

However, studies made by the inventors of the present invention have revealed the following: the compositions described in JP 2000-160024 A have an excellent resistance to gas and moisture permeation, heat, and oil, but in the case that the compositions are used for, for example, fuel system-related and engine-related parts, a composition having a further excellent resistance to fuel oil is preferable.

Therefore, an object of the present invention is to provide a thermoplastic resin composition for automobile parts, which have an excellent resistance to gas and moisture permeation, heat, oil, and the like, particularly, excellent resistance to fuel oil.

According to the present invention, this object has been solved by the finding that resistance to fuel oil is dramatically improved by using a composition including an acrylonitrile-butadiene rubber having a large amount of acrylonitrile instead of a composition including a butyl-based rubber used in JP 2000-160024 A.

In addition, the inventors have found that resistance to fuel oil is further improved when the above-described composition including an acrylonitrile-butadiene rubber further includes a layered clay mineral.

Further, the inventors have found that resistance to fuel oil is excellent when the acrylonitrile-butadiene rubber has an extremely large amount of acrylonitrile although the above-described composition does not further include the layered clay mineral.

Therefore, the present invention provides the following items (1) to (4).

(1) A thermoplastic resin composition for automobile parts comprising a continuous phase composition including a thermoplastic polyamide resin and a disperse phase composition dispersed in the continuous phase composition, wherein the disperse phase composition includes a dynamically crosslinked acrylonitrile-butadiene rubber in which an acrylonitrile amount is 31 wt% or more and less than 55 wt%.

(2) A thermoplastic resin composition for automobile parts comprising a continuous phase composition including a thermoplastic polyamide resin and a disperse phase composition dispersed in the continuous phase composition, wherein the disperse phase composition includes a dynamically crosslinked acrylonitrile-butadiene rubber in which an acrylonitrile amount is 25 wt% or more and less than 55 wt%, and part or whole of the continuous phase composition is a nanocomposite in which a layered clay mineral is dispersed in the thermoplastic polyamide resin.

(3) A thermoplastic resin composition for automobile parts comprising a continuous phase composition including a thermoplastic polyamide resin and a disperse phase composition dispersed in the continuous phase composition, wherein the disperse phase composition includes a dynamically crosslinked acrylonitrile-butadiene rubber in which an acrylonitrile amount is 25 wt% or more and less than 55 wt% and a layered clay mineral dispersed in the acrylonitrile-butadiene rubber.

(4) The thermoplastic resin composition for automobile parts according to the above (3), wherein part or whole of the continuous phase composition is a nanocomposite in which a layered clay mineral is dispersed in the thermoplastic polyamide resin.

The thermoplastic resin composition for automobile parts of the present invention has an excellent resistance to gas and moisture permeation, heat, oil, fuel oil, and the like.

In the accompanying drawing:

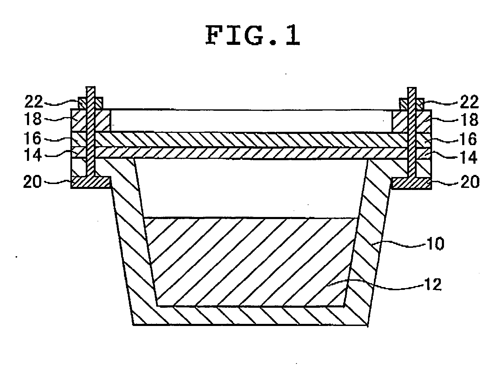

Fig. 1 is a schematic cross-sectional view showing a cup used for evaluation of a resistance to fuel oil in

Examples.

Hereinafter, the present invention will be described in detail.

The first aspect of the present invention is a thermoplastic resin composition for automobile parts comprising a continuous phase composition including a thermoplastic polyamide resin and a disperse phase composition dispersed in the continuous phase composition, wherein the disperse phase composition includes a dynamically crosslinked acrylonitrile-butadiene rubber in which an acrylonitrile amount is 31 wt% or more and less than 55 wt%.

The second aspect of the present invention is a thermoplastic resin composition for automobile parts comprising a continuous phase composition including a thermoplastic polyamide resin and a disperse phase composition dispersed in the continuous phase composition, wherein the disperse phase composition includes a dynamically crosslinked acrylonitrile-butadiene rubber in which an acrylonitrile amount is 25 wt% or more and less than 55 wt%, and part or whole of the continuous phase composition is a nanocomposite in which a layered clay mineral is dispersed in the thermoplastic polyamide resin.

The third aspect of the present invention is a thermoplastic resin composition for automobile parts comprising a continuous phase composition including a thermoplastic polyamide resin and a disperse phase composition dispersed in the continuous phase composition, wherein the disperse phase composition includes a dynamically crosslinked acrylonitrile-butadiene rubber in which an acrylonitrile amount is 25 wt% or more and less than 55 wt% and a layered clay mineral dispersed in the acrylonitrile-butadiene rubber.

In the first to third aspects of the present invention, a continuous phase composition contains a thermoplastic polyamide resin.

Examples of the thermoplastic polyamide resin include polyamide resins such as nylon 6 (N6), nylon 66 (N66), nylon 6/nylon 66 copolymer (N6/N66), aromatic nylon (MXD6), nylon 11 (N11), nylon 12 (N12), nylon 610 (N610), nylon 612 (N612), nylon 6T, nylon 6/6T copolymer, nylon 66/PP copolymer, and nylon 66/PPS copolymer and polyetheresteramide elastomer.

In the second aspect of the present invention, part or whole of the continuous phase composition is a nanocomposite in which a layered clay mineral is dispersed in the thermoplastic polyamide resin. Further, in the first and third aspects of the present invention, it is a preferable aspect.

The nanocomposite is formed by uniformly dispersing separated layers of a layered clay mineral in a thermoplastic polyamide resin in nano-order. Specific examples thereof include those described in JP 62-74957 A. Of those, a nanocomposite including montmorillonite as a layered clay mineral is preferable in that it has an excellent resistance to gas and liquid permeation and has an excellent high-strength and high-elasticity while maintaining tenacity. The resins described above are used as thermoplastic polyamide resins used for nanocomposites.

In the case that part of a continuous phase composition is the above-described nanocomposite, a thermoplastic polyamide resin may further be included. The thermoplastic polyamide resin may be the same as or different from the thermoplastic polyamide resin used for the nanocomposite.

As described below, if necessary, the continuous phase composition may appropriately include various compounding agents in addition to the nanocomposite and thermoplastic polyamide resin.

The ratio of the nanocomposite in the continuous phase composition is preferably 30 to 100 wt%, more preferably 50 to 100 wt% to achieve an excellent resistance to gas permeation or the like.

In the first aspect of the present invention, the disperse phase composition includes a dynamically cross-linked acrylonitrile-butadiene rubber in which an amount of acrylonitrile is 31 wt% or more and less than 55 wt%. Meanwhile, in the second and third aspects of the present invention, the disperse phase composition includes a dynamically cross-linked acrylonitrile-butadiene rubber in which an amount of acrylonitrile is 25 wt% or more and less than 55 wt%.

In the thermoplastic resin composition for automobile parts according to the first aspect of the present invention, an acrylonitrile-butadiene rubber having an extremely large amount of acrylonitrile as described above is used as a rubber to be included in the disperse phase composition. Therefore, without the use of a layered clay mineral, the composition has a dramatically excellent resistance to fuel oil compared to the compositions including a butyl-based rubber (specifically, halogenated iso-olefin/para-alkylstyrene copolymer (Exxon Chemical Company, EXXPRO)) described in JP 2000-160024 A.

Meanwhile, in the thermoplastic resin compositions for automobile parts according to the second and third aspects of the present invention, an acrylonitrile-butadiene rubber having a relatively large amount of acrylonitrile as described above is used as a rubber to be included in the disperse phase composition. Accordingly, the compositions similarly have a dramatically excellent resistance to fuel oil compared to the compositions including a butyl-based rubber described in JP 2000-160024 A.

The acrylonitrile-butadiene rubber to be used in the present invention is not particularly limited except for the amount of acrylonitrile, and conventionally known rubbers may be used.

The disperse phase composition may appropriately include, in addition to the acrylonitrile-butadiene rubber described above, a compounding agent such as a reinforcer, filler, crosslinker, flexibilizer, antioxidant, or processing aid, which are generally compounded in a rubber composition for improving dispersibility, heat resistance, or the like.

In the third aspect of the present invention, the disperse phase composition includes a layered clay mineral. As a result, the resultant thermoplastic resin composition for automobile parts of the present invention has an extremely excellent resistance to fuel oil. Meanwhile, in the first and second aspects of the present invention, a preferable aspect is that the disperse phase composition includes the layered clay mineral.

Preferable example of the layered clay mineral to be included in the disperse phase composition is montmorillonite.

The acrylonitrile-butadiene rubber content in the disperse phase composition is preferably 25 to 99 wt%, more preferably 33 to 98 wt%.

In the present invention, a ratio of the disperse phase composition to the continuous phase composition in the thermoplastic resin composition for automobile parts is preferably 10/90 to 90/10, more preferably 20/80 to 85/15 by weight.

The disperse phase composition is dispersed in the above-described continuous phase composition and is dynamically cross-linked. That is, the thermoplastic resin composition for automobile parts is formed by conducting crosslinkage of an acrylonitrile-butadiene rubber while kneading the continuous phase composition and disperse phase composition under the condition that the continuous phase composition and disperse phase composition serve as a continuous phase and disperse phase, respectively. To achieve the above-described condition, the volume fractions and melt viscosities of both compositions are set so as to satisfy the following expression (1).

$$(\Phi_R/\Phi_M) \times (\eta_M/\eta_R) < 1 \qquad (1)$$

$\Phi_M$: volume fraction of the continuous phase composition
$\Phi_R$: volume fraction of the disperse phase composition
$\eta_M$: melt viscosity of the continuous phase composition
$\eta_R$: melt viscosity of the disperse phase composition

In the present specification, the term "melt viscosity" means a viscosity in accordance with the temperature and shear rate at the time of kneading. The melt viscosity depends on a temperature, shear rate, and shear stress. Therefore, the shear rate and shear stress of each ingredient, which is in molten state and flows through a tube, are generally determined at the temperature at the time of kneading, and the melt viscosity is calculated from the following expression (2).

$$\eta = \sigma / \dot{\gamma} \qquad (2)$$

$\sigma$: shear stress
$\gamma$: shear rate

In the thus-obtained thermoplastic resin composition for automobile parts of the present invention, the disperse phase composition including a crosslinked acrylonitrile-butadiene rubber is finely dispersed in a continuous phase of the continuous phase composition including a thermoplastic polyamide resin.

In the case that the compatibility between the continuous phase composition and the disperse phase composition is low, a compatibilizing agent is preferably compounded to compatibilize the both compositions. When the compatibilizing agent is compounded, the characteristics of the both ingredients are exerted more effectively because the interfacial tensions of the continuous phase composition and the disperse phase composition are lowered, and the particle size of a rubber constituting the disperse phase becomes smaller.

Examples of the compatibilizing agent include a copolymer having either or both of structures of a thermoplastic polyamide resin and an acrylonitrile-butadiene rubber; and a copolymer having a functional group such as an epoxy group, carbonyl group, halogen group, amino group, oxazoline group, or hydroxy group, which is capable of reacting with either or both of a thermoplastic polyamide resin and an acrylonitrile-butadiene rubber. Specific examples thereof include carboxylated NBR, a copolymer having glycidyl methacrylate, and a polymer having an epoxy group in a molecule chain.

The amount of the compounded compatibilizing agent is preferably 0.5 to 20 parts by weight with respect to the total amount of polymer ingredients (the thermoplastic polyamide resin and the acrylonitrile-butadiene rubber) of 100 parts by weight.

In addition, the rubber particle size of the disperse phase is regulated to preferably 10 μm or less, more preferably 5 μm or less, further preferably 0.1 to 2 μm by compounding the compatibilizing agent.

In the case that the disperse phase composition is dynamically crosslinked, a vulcanizing agent, vulcanizing aid, vulcanizing condition (such as temperature or time), or the like may be appropriately determined according to the composition ratio of the disperse phase composition, which is not particularly limited.

As a vulcanizing agent, a general rubber vulcanizing agent (a crosslinker) can be used. Specific examples include powder sulfur, precipitated sulfur, high dispersible sulfur, surface-treated sulfur, insoluble sulfur, dimorpholine disulfide, and alkylphenol disulfide as sulfur-based vulcanizing agents, and are used in the ratio of about 0.5 to 4 phr (the term "phr" represents a part by weight per 100 parts by weight of rubber).

In addition, examples of an organic peroxide-based vulcanizing agent include benzoylperoxide, t-butylhydroperoxide, 2,4-dichlorobenzoylperoxide, 2,5-dimethyl-2,5-di(t-butylperoxy)hexane, and 2,5-dimethylhexane-2,5-di(peroxylbenzoate), and, for example, are used in the ratio of about 1 to 20 phr.

Furthermore, examples of a phenol resin-based vulcanizing agent include bromide of an alkylphenol resin; and mixed crosslinking system containing a halogen-donor such as tin chloride or chloroprene and an alkylphenol resin. And the vulcanizing agent thereof can be used in the ratio of about 1 to 20 phr.

Other compounding ingredients include zinc white (about 5 phr), magnesium oxide (about 4 phr), litharge (about 10 to 20 phr), p-quinonedioxime, p-dibenzoyl quinonedioxime, tetrachloro-p-benzoquinone, poly-p-dinitrosobenzene (about 2 to 10 phr), and methylenedianiline(about 0.2 to 10 phr).

As required, a vulcanizing accelerator can be added. Examples of the vulcanizing accelerator include general vulcanizing accelerators such as aldehyde/ammonium-based, guanidine-based, thiazole-based, sulfenamide-based, thiuram-based, salt of dithioic acid-based, and thiourea-based. The vulcanizing accelerators thereof can be used in the ratio of about 0.1 to 2 phr.

A specific example of the aldehyde/ammonium-based vulcanizing accelerator includes hexamethylene tetramine. An example of the guanidine-based vulcanizing accelerator includes diphenyl guanidine. Examples of the thiazole-based vulcanizing accelerator include dibenzothiazyl disulfide (DM) and 2-mercaptobenzothiazol, and Zn salts and cyclohexylamine salts thereof. Examples of the sulfenamide-based vulcanizing accelerator include cyclohexylbenzothiazyl sulfenamide (CBS), N-oxydiethylene benzothiazyl-2-sulfenamide, N-t-butyl-2-benzothiazol sulfenamide, and 2-(thymolpolynyldithio) benzothiazol. Examples of the thiuram-based vulcanizing accelerator include tetramethylthiuram disulfide (TMTD), tetraethylthiuram disulfide, tetramethylthiuram monosulfide (TMTM), and dipentamethylenethiuram tetrasulfide. Examples of the salt of dithioic acid-based vulcanizing accelerator include Zn-dimethyldithiocarbamate, Zn-diethyldithiocarbamate, Zn-di-n-butyldithiocarbamate, Zn-ethylphenyldithiocarbamate, Te-diethyldithiocarbamate, Cu-dimethyldithiocarbamate, Fe-dimethyldithiocarbamate, and pipecolinpipecolyl dithiocarbamate. Examples of the thiourea-based vulcanizing accelerator include ethylenethiourea and diethylthiourea.

Furthermore, a general auxiliary agent for rubber can be used as a vulcanization-accelerating aid in combination. Examples of the vulcanization-accelerating aid include zinc white (about 5 phr), stearic acid, oleic acid, and Zn salts thereof (about 2 to 4 phr).

The thermoplastic resin composition for automobile parts of the present invention is obtainable by melting and kneading the continuous phase composition and the disperse phase composition selected so as to satisfy the condition of the above-described expression (1) using a twin-screw kneading extruder or the like to disperse the disperse phase composition in the continuous phase composition constituting a continuous phase.

The vulcanizing agent is added at the time of kneading. Various compounding agents for the continuous phase composition and the disperse phase composition other than the vulcanizing agent may be added while kneading, but it is preferable that they have previously been added before kneading.

An apparatus to be used for kneading is not particularly limited, and examples thereof include a screw extruder, kneader, Banbury mixer, and twin-screw kneading extruder. Among them, the twin-screw kneading extruder is preferable. Note that kneading may be successively performed using two or more of the apparatus.

The temperature at the time of kneading is not particularly limited as long as it is a temperature to melt the thermoplastic polyamide resin or higher. The shear rate at the time of kneading is preferably 50 to 7,500 sec$^{-1}$,

The total time for kneading is preferably 30 seconds to 10 minutes. In the case that a vulcanizing agent is subsequently added, the kneading time after the addition (vulcanizing time) is preferably 15 seconds to 5 minutes.

The thermoplastic resin composition for automobile parts of the present invention has excellent resistance to gas and moisture permeation, heat, oil, and the like, and particularly, has excellent resistance to fuel oil. Therefore, the composition is suitably used for fuel system-related and engine-related automobile parts. Specifically, the composition is suitably used for a hose (e.g., gasoline hose or fuel pipe), packing, or the like, which is used in an engine room and fuel tank of an automobile.

In addition, the composition is suitably used for a low-permeability hose, air tire having an air-permeation preventive layer, or the like. Furthermore, the composition is suitably used for a fender, rubber bag, fuel tank, or the like.

In the thermoplastic resin composition for automobile parts of the present invention, the continuous phase consists of the continuous phase composition including the thermoplastic polyamide resin. Therefore, as in the case of a conventional thermoplastic resin, the composition may be molded in the desired form by various methods depending on applications. The molding method is not particularly limited, and examples thereof include extrusion molding performed by using T-die or the like, injection molding performed by using a mold or the like, inflation molding performed by using a inflation molding machine or the like, and calender molding performed by using a calender molding machine.

More specifically, a thin film may be obtained by, for example, extrusion molding or calender molding. The

**EP 1 607 442 A1**

resultant thin film has excellent flexibility, resistance to gas and moisture permeation, heat, oil, fuel oil, and the like, so that it is suitably used for an air-permeation preventive layer of an air tire; a hose tube or hose cover of a low-permeability hose; or the like.

A method for producing an air tire having an air-permeation preventive layer composed of a thin layer of the thermoplastic resin composition for automobile parts of the present invention will be described taking the case of the air-permeation preventive layer arranged inside a carcass layer as an example.

Firstly, the thermoplastic resin composition for automobile parts of the present invention is extruded into a thin film form having predetermined width and thickness, and the resultant product is attached on a drum for molding a tire in a cylindrical form. Then, members to be generally used for tire production such as carcass layer, belt layer, and tread layer consisting of an unvulcanized rubber are successively layered thereon, and the drum is pull out to prepare a green tire. Subsequently, the green tire is vulcanized with heating in accordance with a conventional method, to thereby yield a desired air tire. Note that, in the case that the air-permeation preventive layer is placed outside the carcass layer, the tire may be produced in a similar manner to the above-described method.

Next, there will be described a method for producing a hose composed of an inner tube, reinforcing layer, and outer tube by using the thermoplastic resin composition for automobile parts of the present invention.

Firstly, by use of a pellet of the thermoplastic resin composition for automobile parts of the present invention, the thermoplastic resin composition for automobile parts is extruded on a mandrel on which a mold-releasing agent has previously been applied by crosshead extrusion using a resin extruder to form an inner tube. Another thermoplastic resin composition for automobile parts of the present invention or a general thermoplastic elastomer may further be extruded on the inner tube to form an inner tube and an outer layer. Next, if necessary, an adhesive is applied on the inner tube by coating, spraying or the like. Furthermore, reinforcing yarn or reinforcing steel wire is braided by using a braider. After an adhesive is applied, if necessary, on the reinforcing layer for adhesion with the outer tube, the thermoplastic resin composition of the present invention or the general thermoplastic elastomer is extruded by using a resin extruder having a crosshead to form the outer tube. Finally, the mandrel is pulled out, to thereby yield a desired hose.

Examples of the adhesive applied on the inner tube or the reinforcing layer include isocyanate-based, urethane-based, phenol resin-based, resorcin-based, chlorinated rubber-based, and HRH-based adhesives, and the like. Among them, the isocyanate-based and urethane-based adhesives are particularly preferred.

Note that, although the mandrel is used in the above-described production method, in the case of the use of thermoplastic resin composition for automobile parts of the present invention, there is no vulcanization step required at the time of production of a general rubber hose or a rubber/resin composite hose. Therefore, there is no contracted deformation due to heat in vulcanization, deformation due to a pressure in vulcanization, or the like, and the size accuracy of the hose is easily maintained. Accordingly, the hose may be produced without use of the mandrel as long as the particularly exact size accuracy is not required.

EXAMPLES

Hereinafter, the present invention will be described in detail by way of examples, but it is not limited thereto.

(Examples 1 to 9 and Comparative Examples 1 and 2)

1. Preparation of test sample

The ingredients shown in Table 1 below were mixed at the composition ratio (parts by weight) shown in Table 1 for 5 minutes using a Banbury mixer (volume: 16 L). Subsequently, the mixture was pelletized using a rubber pelletizer, to thereby yield a rubber pellet.

Next; the rubber pellet, the ingredients of the continuous phase composition, and the ingredient of the vulcanizing system were fed into a twin-screw kneader for kneading at the composition ratio (parts by weight) shown in Table 1 below to dynamically crosslink the disperse phase composition. The kneading conditions were as follows: 230°C, 3 minutes, 1,000 sec$^{-1}$ (shear rate).

Thereafter, the resultant thermoplastic resin composition for automobile parts was molded into a sheet at 230°C by using a T-die extruder, to thereby yield a test sample.

2. Evaluation of properties

For each test sample of the thermoplastic resin composition for automobile parts obtained above, the resistance to fuel oil was evaluated as described below.

Fig. 1 is a schematic cross-sectional view showing a cup used for evaluation of a resistance to fuel oil.

5 g of gasoline (methanol added (10% by weight)) 12 was poured to a stainless-steel cup 10 (volume: 10 mL) as shown in Fig. 1. The top opening of the cup 10 was covered with a sample sheet 14 (thickness: 1mm) obtained by cutting the above-obtained test sample, and a sintered metal plate 16 was put thereon. Then, the plate was fastened with a screw bolt 20 and a screw nut 22 via a fixing part 18, and the weight was determined.

Thereafter, the cup was turned upside down so that gasoline comes into contact with the sample sheet, and it was allowed to stand under an atmosphere of 20°C for 2,000 hours, followed by weight determination.

The gasoline permeation resistance coefficient was calculated from the following expression.

Gasoline permeation resistance coefficient

$$[mg \cdot mm/ (24h \cdot cm^2)] = M \cdot t/ (T \cdot A)$$

In the expression, M, t, T, and A represent a reduced weight [mg], sample sheet thickness [mm], test time [day], and permeation area [$cm^2$], respectively.

The results are shown in Table 1.

The symbols in Table 1 have the following meanings:

A: the gasoline permeation resistance coefficient is $2.0 \times 10^{-3}$ mg·mm/(24h·cm$^2$) or less;

B: the gasoline permeation resistance coefficient is more than $2.0 \times 10^{-3}$ mg·mm/(24h·cm$^2$) and $4.0 \times 10^{-2}$ mg·mm/ (24h·cm$^2$) or less;

C: the gasoline permeation resistance coefficient is more than $4.0 \times 10^{-2}$ mg·mm/(24h·cm$^2$) and $5.0 \times 10^{-2}$ mg·mm/ (24h·cm$^2$) or less; and

D: the gasoline permeation resistance coefficient is more than $5.0 \times 10^{-2}$ mg·mm/(24h·cm$^2$).

As is clear from Table 1, the thermoplastic resin compositions for automobile parts of the present invention (Examples 1 to 9) were thermoplastic and had an excellent resistance to fuel oil.

Meanwhile, in the case that both extremely high NBR and a nanocomposite were not used (Comparative Example 1), and in the case that a nanocomposite and low NBR were used (Comparative Example 2), the compositions had an inferior resistance to fuel oil.

Table 1

| | Example 1 | Example 2 | Example 3 | Example 4 | Comparative Example 1 | Example 5 | Example 6 | Example 7 | Comparative Example 2 | Example 8 | Example 9 |
|---|---|---|---|---|---|---|---|---|---|---|---|
| Disperse phase composition | | | | | | | | | | | |
| Extremely high NBR | 100 | 100 | 100 | 100 | | | | | | | |
| High NBR | | | | | | | | | | | 100 |
| Middle high NBR | | | | | | | | | | 100 | |
| Middle NBR | | | | | 100 | 100 | 100 | 100 | | | |
| Low NBR | | | | | | | | | 100 | | |
| Montmorillonite | | 5 | | 5 | | 5 | | 5 | 5 | | |
| Carbon black | 40 | 38 | 40 | 38 | 40 | 38 | 40 | 38 | 38 | 40 | 40 |
| Plasticizer | 10 | 10 | 10 | 10 | 10 | 10 | 10 | 10 | 10 | 10 | 10 |
| Zinc white | 3 | 3 | 3 | 3 | 3 | 3 | 3 | 3 | 3 | 3 | 3 |
| Stearic acid | 2 | 2 | 2 | 2 | 2 | 2 | 2 | 2 | 2 | 2 | 2 |
| Antioxidant | 1 | 1 | 1 | 1 | 1 | 1 | 1 | 1 | 1 | 1 | 1 |
| Continuous phase composition | | | | | | | | | | | |
| PA | 104 | 106 | | | 104 | 106 | | | | 104 | 104 |
| Nanocomposite PA | | | 104 | 106 | | | 104 | 106 | 106 | | |
| Vulcanizing system | 5 | 5 | 5 | 5 | 5 | 5 | 5 | 5 | 5 | 5 | 5 |
| Resistance to fuel oil | B | B | B | A | D | C | C | B | D | C | B |

EP 1 607 442 A1

The ingredients shown in Table 1 are as follows.

<Disperse phase composition>

- Extremely high NBR: Nipol DN003, manufactured by Zeon Corporation, Mooney viscosity 78, acrylonitrile amount 50 wt%
- High NBR: Nipol 1041L, manufactured by Zeon Corporation, Mooney viscosity 78, acrylonitrile amount 41 wt%
- Middle high NBR: Nipol 1042, manufactured by Zeon Corporation, Mooney viscosity 78, acrylonitrile amount 33 wt%
- Middle NBR: Nipol 1043, manufactured by Zeon Corporation, Mooney viscosity 78, acrylonitrile amount 29 wt%
- Low NBR: Nipol DN401, manufactured by Zeon Corporation, Mooney viscosity 78, acrylonitrile amount 18 wt%
- Montmorillonite: BENTONE 27, manufactured by NL INDUSTRIES
- Carbon black: HTC #G, manufactured by Nippon Steel Chemical Co., Ltd., GPF
- Plasticizer: Adekasizer RS-1000, manufactured by Asahi Denka Co., Ltd.
- Zinc white (zinc oxide): zinc white No. 3, manufactured by Mitsui Mining and Smelting Co., Ltd.
- Stearic acid
- Antioxidant

<Continuous phase composition>

- PA (nylon 6/66 copolymer): UBE nylon 5013B, manufactured by Ube Industries, Ltd.
- Nanocomposite PA: UBE nylon 5034C2, manufactured by Ube Industries, Ltd. (which is a composite in which montmorillonite is dispersed in a nylon 6/66 copolymer)

<Vulcanizing system>

- N,N'-phenylenedimaleimide: HVA-2, manufactured by DuPont

**Claims**

1. A thermoplastic resin composition for automobile parts comprising a continuous phase composition including a thermoplastic polyamide resin and a disperse phase composition dispersed in the continuous phase composition, wherein the disperse phase composition includes a dynamically crosslinked acrylonitrile-butadiene rubber in which an acrylonitrile amount is 31 wt% or more and less than 55 wt%.

2. A thermoplastic resin composition for automobile parts comprising a continuous phase composition including a thermoplastic polyamide resin and a disperse phase composition dispersed in the continuous phase composition, wherein the disperse phase composition includes a dynamically crosslinked acrylonitrile-butadiene rubber in which an acrylonitrile amount is 25 wt% or more and less than 55 wt%, and part or whole of the continuous phase composition is a nanocomposite in which a layered clay mineral is dispersed in the thermoplastic polyamide resin.

3. A thermoplastic resin composition for automobile parts comprising a continuous phase composition including a thermoplastic polyamide resin and a disperse phase composition dispersed in the continuous phase composition, wherein the disperse phase composition includes a dynamically crosslinked acrylonitrile-butadiene rubber in which an acrylonitrile amount is 25 wt% or more and less than 55 wt% and a layered clay mineral dispersed in the acrylonitrile-butadiene rubber.

4. The thermoplastic resin composition for automobile parts according to claim 3, wherein part or whole of the continuous phase composition is a nanocomposite in which a layered clay mineral is dispersed in the thermoplastic polyamide resin.

FIG.1

**European Patent Office**

## EUROPEAN SEARCH REPORT

Application Number

EP 05 01 2769

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 383 083 A (NIELINGER ET AL) 10 May 1983 (1983-05-10) * examples 2-7 * | 1 | C08L77/00 |
| Y | | 2-4 | |
| X | GB 1 559 041 A (BAYER AG) 16 January 1980 (1980-01-16) * claim 1; example g * | 1 | |
| Y | | 2-4 | |
| Y | EP 1 241 229 A (UBE INDUSTRIES, LTD) 18 September 2002 (2002-09-18) * paragraphs [0038] - [0041]; claims 12,13 * | 2-4 | |

TECHNICAL FIELDS SEARCHED (Int.Cl.7)

C08L

The present search report has been drawn up for all claims

| Place of search | Date of completion of the search | Examiner |
|---|---|---|
| Munich | 31 August 2005 | West, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**EP 1 607 442 A1**

**ANNEX TO THE EUROPEAN SEARCH REPORT
ON EUROPEAN PATENT APPLICATION NO.**

EP 05 01 2769

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2005

| Patent document cited in search report | | Publication date | Patent family member(s) | | Publication date |
|---|---|---|---|---|---|
| US 4383083 | A | 10-05-1983 | DE | 2943515 A1 | 07-05-1981 |
| | | | DE | 3068889 D1 | 13-09-1984 |
| | | | EP | 0027955 A1 | 06-05-1981 |
| | | | JP | 56067362 A | 06-06-1981 |
| GB 1559041 | A | 16-01-1980 | DE | 2632957 A1 | 26-01-1978 |
| | | | DE | 2730749 A1 | 07-09-1978 |
| | | | CH | 626108 A5 | 30-10-1981 |
| | | | FR | 2359179 A1 | 17-02-1978 |
| | | | IT | 1079897 B | 13-05-1985 |
| | | | JP | 53012956 A | 06-02-1978 |
| | | | NL | 7708136 A | 24-01-1978 |
| EP 1241229 | A | 18-09-2002 | DE | 60202089 D1 | 05-01-2005 |
| | | | EP | 1241229 A1 | 18-09-2002 |
| | | | JP | 2002338803 A | 27-11-2002 |
| | | | JP | 3528838 B2 | 24-05-2004 |
| | | | JP | 2002370551 A | 24-12-2002 |
| | | | US | 2003037831 A1 | 27-02-2003 |
| | | | JP | 2003246028 A | 02-09-2003 |

EPO FORM P0459

For more details about this annex : see Official Journal of the European Patent Office, No. 12/82

12